# EUROPÄISCHE PATENTSCHRIFT

(11) **EP 0 758 731 B1**
(45) Veröffentlichungstag und Bekanntmachung des Hinweises auf die Patenterteilung: **07.01.1999**
(21) Anmeldenummer: 96112598.6
(22) Anmeldetag: 03.08.1996
(51) Int. Cl.: F24H 1/43, F24H 8/00

(54) **Wärmeaustauschsystem zur Wasserwärmung**
Heat exchange system for water heating
Système d'échange de chaleur pour le chauffage d'eau

(30) Priorität: 11.08.1995 DE 19529559
(43) Veröffentlichungstag der Anmeldung: 19.02.1997
(73) Patentinhaber: WIELAND-WERKE AG, 89079 Ulm (DE)
(72) Erfinder:

(56) Entgegenhaltungen:
- DE-A- 3 139 477
- DE-A- 4 309 598
- FR-A- 830 998
- NL-A- 8 403 236

## Beschreibung

Die Erfindung betrifft ein Wärmeaustauschsystem nach dem Oberbegriff des Anspruchs 1.

Gasbeheizte Geräte zur Erwärmung von Wasser sind seit langem bekannt. Bei einem Wärmeaustauschsystem der genannten Art (etwa nach der EP-A-0.146.976) ist ein Gasbrenner in einem gewickelten Rippenrohrwärmeaustauscher angeordnet. Dabei führt die große Oberfläche des Rippenrohres zu hoher Wärmebelastung, was wiederum zu hohen Wandtemperaturen führt. Im ungünstigsten Fall kann es zum Kochen des Wassers und zur Zerstörung des Rohres kommen.

Zudem ragen die Rippenspitzen in den Flammenbereich und begünstigten die Schadstoffbildung bei der Verbrennung.

Der Erfindung liegt daher die Aufgabe zugrunde, ein Wärmeaustauschsystem der genannten Art so auszubilden, daß die geschilderten Nachteile entfallen.

Die Aufgabe wird erfindungsgemäß durch die Merkmale des Anspruchs 1 gelöst.

Der Glattrohrbereich dient überwiegend zur Aufnahme der Strahlungswärme und der nachgeschaltete Rippenrohrbereich zur Aufnahme der von den Verbrennungsgasen abzugebenden Wärme. Abhängig vom Brennertyp und der Dimensionierung des Glattrohrbereichs werden bis zu 25 % der Leistung auf das Wasser übertragen. Die heißen Abgase umströmen den Rippenrohrbereich und werden unterhalb der Rohrschlange abgeführt. Über die Berippung wird ein Großteil der noch in den Verbrennungsgasen enthaltenen Wärmeenergie auf das Wasser übertragen (Konvektionsbereich). Je nach Länge dieses Rippenrohrbereichs können die Abgase auch bis unter den Taupunkt abgekühlt werden zur Nutzung der Kondensationswärme.

Vorzugsweise erstreckt sich dabei der Glattrohrbereich etwa über ein Drittel bis zur Hälfte und der Rippenrohrbereich etwa über die Hälfte bis zu zwei Dritteln der Höhe der Rippenschlange.

Als erfindungsgemäße Alternative wird vorgeschlagen, daß die Rohrschlange als Kondensationsbereich anschließend an den Rippenrohrbereich einen zweiten, unteren Glattrohrbereich aufweist.

Vorzugsweise erstreckt sich dabei der obere Glattrohrbereich, der Rippenrohrbereich und der untere Glattrohrbereich jeweils etwa über ein Drittel der Höhe der Rohrschlange.

Bei der erfindungsgemäßen Rohrschlange beträgt im Rippenrohrbereich der Rippendurchmesser d = 15 bis 50 mm, die Rippenhöhe h = 1,5 bis 15 mm und die Rippenteilung t = 1 bis 6 mm.

Nach besonderen Ausführungsformen der Erfindung ist die Rohrschlange zylindrisch oder leicht kegelförmig gewickelt. Sie besteht vorzugsweise aus Kupfer, Aluminium, Edelstahl oder unlegiertem Kohlenstoff-Stahl.

Der Rippenrohrbereich der erfindungsgemäßen Rohrschlange läßt sich dadurch leicht herstellen, daß - ausgehend von einem Glattrohr - die Berippung in an sich bekannter Weise nach dem Rippenrohrwalzverfahren erfolgt (vgl. beispielsweise US-PS 3.327.512).

Nach einer weiteren Alternative können die Rippen durch Schweißen oder Hartlöten auf ein Glattrohr aufgebracht werden.

Die Erfindung wird anhand der folgenden Ausführungsbeispiele näher erläutert. Es zeigt
- Fig. 1: einen Vertikalschnitt durch ein erfindungsgemäßes Wärmeaustauschsystem,
- Fig. 2: schematisch eine gewickelte Rippenrohrschlange mit Brennraum und Konvektionsbereich und
- Fig. 3: schematisch eine Rippenrohrschlange mit Brennraum, Konvektions- und Kondensationsbereich.

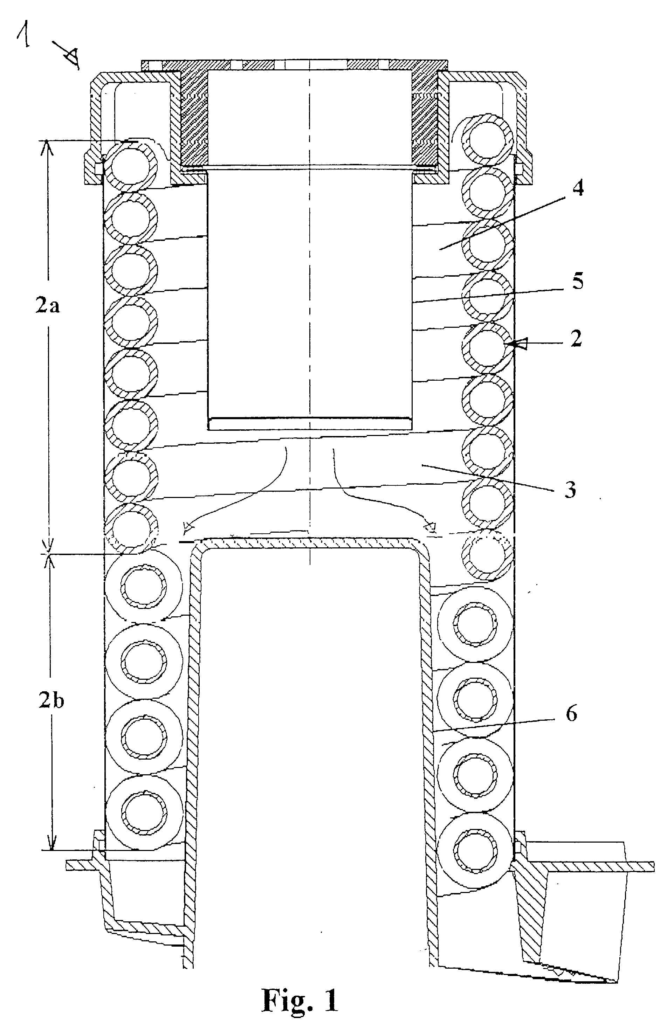

Bei dem Wärmeaustauschsystem 1 nach Fig. 1 wird der wasserführende Wärmeaustauscher von einer senkrecht stehenden, zylindrisch gewickelten Rohrschlange 2 gebildet, deren Windungen 3 eng aneinander liegen. Die einstückig ausgebildete Rohrschlange 2 weist einen oberen Glattrohrbereich 2a auf, der den Brennraum 4 bildet, in dem der Gasbrenner 5 angeordnet ist. Nachgeschaltet ist ein unterer Rippenrohrbereich 2b.

Im oberen Glattrohrbereich 2a wird das in der Rohrschlange 2 strömende Wasser vorwiegend durch die Strahlungswärme des Gasbrenners 5 erwärmt. Durch den Verdrängungskörper 6 werden die Verbrennungsgase (s. Pfeile) zum Rippenrohrbereich 2b geführt, der vorwiegend zur Aufnahme der von den Verbrennungsgasen abzugebenden Wärme dient (Konvektionsbereich). Dadurch wird auf kleinstem Raum eine hohe Übertragungsleistung erreicht.

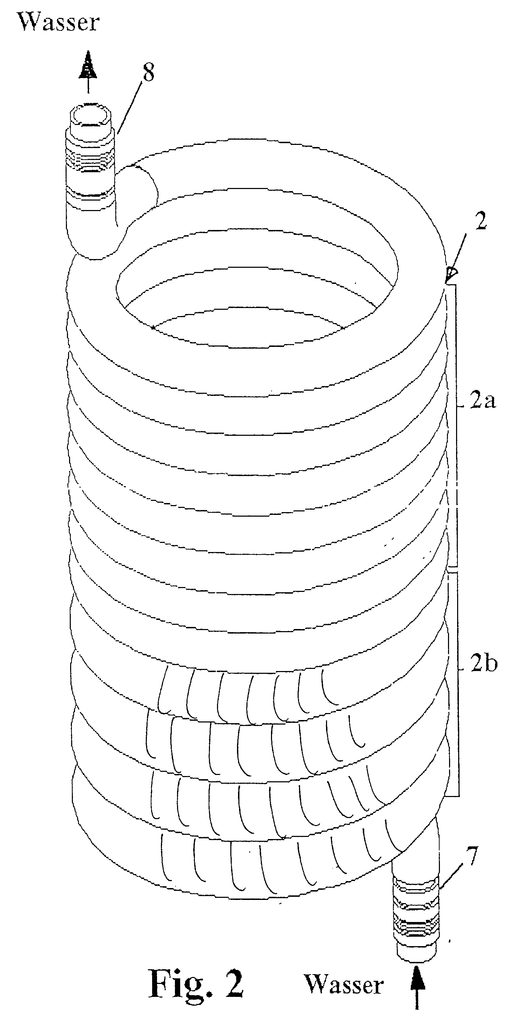

Fig. 2 zeigt schematisch eine gewickelte Rohrschlange 2 mit dem oberen Glattrohrbereich 2a und dem unteren Rippenrohrbereich 2b (wobei die Berippung schematisch angedeutet wurde). Die Anschlüsse 7, 8 sind um 90° abgebogen, so daß eine einfache Montage in Achsrichtung möglich ist.

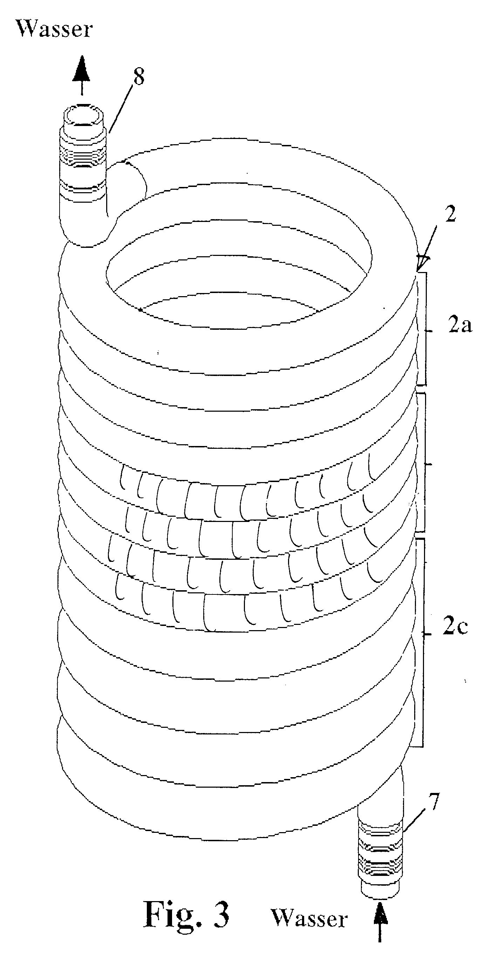

Fig. 3 zeigt ergänzend eine Rohrschlange 2, die einen zweiten, unteren Glattrohrbereich 2c aufweist (Kondensationsbereich).

### Zahlenbeispiel:

In einem erfindungsgemäßen Wärmeaustauschsystem entsprechend Fig. 1/2 kommt eine Rohrschlange 2 aus einer Aluminium-Legierung (AlMgSi0,5) mit folgenden Abmessungen im Rippenrohrbereich 2b zum Einsatz:
- Rippendurchmesser: d = 36,4 mm
- Rippenhöhe: h = 8,5 mm
- Rippenteilung: t = 3,6 mm.

Der Wickeldurchmesser beträgt 200 mm, Anzahl der Windungen 10 (Glattrohrbereich 2a: 5 Windungen; Rippenrohrbereich 2b: 5 Windungen).

Mit diesem Wärmeaustauschsystem werden günstige Ergebnisse erzielt.

## Patentansprüche

1. Wärmeaustauschsystem (1), in dessen Brennraum (4) einem wasserführenden Wärmeaustauscher in Form einer im wesentlichen senkrecht stehenden, gewickelten Rohrschlange (2) mit aneinander liegenden Windungen (3) ein Gasbrenner (5) zugeordnet ist, wobei
die einstückig ausgebildete Rohrschlange (2) einen oberen, den Brennraum (4) bildenden Glattrohrbereich (2a) und einen anschließenden, unteren Rippenrohrbereich (2b) aufweist.

2. Wärmeaustauschsystem nach Anspruch 1, dadurch gekennzeichnet,
daß sich der Glattrohrbereich (2a) etwa über ein Drittel bis zur Hälfte und der Rippenrohrbereich (2b) etwa über die Hälfte bis zu zwei Dritteln der Höhe der Rohrschlange (2) erstreckt.

3. Wärmeaustauschsystem nach Anspruch 1, dadurch gekennzeichnet,
daß die Rohrschlange (2) anschließend an den Rippenrohrbereich (2b) einen zweiten, unteren Glattrohrbereich (2c) aufweist.

4. Wärmeaustauschsystem nach Anspruch 3, dadurch gekennzeichnet,
daß sich der obere Glattrohrbereich (2a), der Rippenrohrbereich (2b) und der untere Glattrohrbereich (2c) jeweils über etwa ein Drittel der Höhe der Rohrschlange (2) erstreckt.

5. Wärmeaustauschsystem nach einem oder mehreren der Ansprüche 1 bis 4, dadurch gekennzeichnet,
daß im Rippenrohrbereich (2b) der Rippendurchmesser d = 15 bis 50 mm, die Rippenhöhe h = 1,5 bis 15 mm und die Rippenteilung t = 1 bis 6 mm beträgt.

6. Wärmeaustauschsystem nach einem oder mehreren der Ansprüche 1 bis 5, dadurch gekennzeichnet,
daß die Rohrschlange (2) zylindrisch gewickelt ist.

7. Wärmeaustauschsystem nach einem oder mehreren der Ansprüche 1 bis 5, dadurch gekennzeichnet,
daß die Rohrschlange (2) leicht kegelförmig gewickelt ist.

8. Wärmeaustauschsystem nach einem oder mehreren der Ansprüche 1 bis 7, dadurch gekennzeichnet,
daß die Rohrschlange (2) aus Kupfer, Aluminium, Edelstahl oder unlegiertem Kohlenstoff-Stahl besteht.

9. Verfahren zur Ausbildung des Rippenrohrbereichs (2b) bei einer Rohrschlange (2) des Wärmeaustauschsystems (1) nach einem oder mehreren der Ansprüche 1 bis 8,
dadurch gekennzeichnet,
daß die Berippung in an sich bekannter Weise nach dem Rippenrohrwalzverfahren erfolgt.

10. Verfahren zur Ausbildung des Rippenrohrbereichs (2b) bei einer Rohrschlange (2) des Wärmeaustauschsystems (1) nach einem oder mehreren der Ansprüche 1 bis 8,
dadurch gekennzeichnet,
daß Rippen durch Schweißen oder Hartlöten auf ein Glattrohr aufgebracht werden.

## Claims

1. Heat exchange system (1), in the combustion chamber (4) of which a gas burner (5) is associated with a water-carrying heat exchanger in the form of a substantially upright, wound tube coil (2) having turns (3) that abut one another, wherein the single-piece tube coil (2) has an upper, smooth tube region (2a), forming the combustion chamber (4), and an adjacent, lower, ribbed tube region (2b).

2. Heat exchange system according to claim 1, characterised in that the smooth tube region (2a) extends approximately over one third to half and the ribbed tube region (2b) extends approximately over half to two thirds of the height of the tube coil (2).

3. Heat exchange system according to claim 1, characterised in that the tube coil (2) has, adjacent to the ribbed tube region (2b), a second, lower smooth tube region (2c).

4. Heat exchange system according to claim 3, characterised in that each of the upper smooth tube region (2a), the ribbed tube region (2b) and the lower smooth tube region (2c) extends over approximately one third of the height of the tube coil (2).

5. Heat exchange system according to one or more of claims 1 to 4, characterised in that, in the ribbed tube region (2b), the rib diameter d = 15 to 50 mm, the rib height h = 1.5 to 15 mm and the rib pitch t = 1 to 6 mm.

6. Heat exchange system according to one or more of claims 1 to 5, characterised in that the tube coil (2) is wound cylindrically.

7. Heat exchange system according to one or more of claims 1 to 5, characterised in that the tube coil (2) is wound in a slightly conical manner.

8. Heat exchange system according to one or more of claims 1 to 7, characterised in that the tube coil (2) is produced from copper, aluminium, stainless steel or unalloyed carbon steel.

9. Process for forming the ribbed tube region (2b) in a tube coil (2) of the heat exchange system (1) according to one or more of claims 1 to 8, characterised in that the ribbing is effected in a manner known per se in accordance with the ribbed tube rolling process.

10. Process for forming the ribbed tube region (2b) in a tube coil (2) of the heat exchange system (1) according to one or more of claims 1 to 8, characterised in that ribs are fitted on a smooth tube by welding or hard soldering.

## Revendications

1. Système échangeur de chaleur (1), dans la chambre de combustion (4) duquel un brûleur à gaz (5) est associé à un échangeur de chaleur qui assure le passage de l'eau, sous forme d'un serpentin tubulaire enroulé disposé sensiblement verticalement (2) avec des spires (3) en contact les unes avec les autres,
dans lequel le serpentin tubulaire (2) réalisé d'une seule pièce comprend une région tubulaire lisse supérieure (2a) qui forme la chambre de combustion (4), et une région tubulaire nervurée inférieure (2b) qui s'y raccorde.

2. Système échangeur de chaleur selon la revendication 1, caractérisé en ce que la région tubulaire lisse (2a) s'étend sur environ un tiers jusqu'à la moitié, et la région tubulaire nervurée (2b) s'étend sur environ la moitié jusqu'aux deux tiers de la hauteur du serpentin tubulaire (2).

3. Système échangeur de chaleur selon la revendication 1, caractérisé en ce que le serpentin tubulaire (2) comprend à la suite de la région tubulaire nervurée (2b) une seconde région tubulaire lisse inférieure (2c).

4. Système échangeur de chaleur selon la revendication 3, caractérisé en ce que la région tubulaire lisse supérieure (2a), la région tubulaire nervurée (2b) et la région tubulaire lisse inférieure (2c) s'étendent sur environ un tiers de la hauteur du serpentin tubulaire (2).

5. Système échangeur de chaleur selon l'une ou plusieurs des revendications 1 à 4, caractérisé en ce que dans la région tubulaire nervurée (2b) le diamètre des nervures d est compris entre 15 et 50 mm, la hauteur des nervures h est comprise entre 1,5 et 15 mm, et le pas des nervures t est compris entre 1 et 6 mm.

6. Système échangeur de chaleur selon l'une ou plusieurs des revendications 1 à 5, caractérisé en ce que le serpentin tubulaire (2) est enroulé sous forme cylindrique.

7. Système échangeur de chaleur selon l'une ou plusieurs des revendications 1 à 5, caractérisé en ce que le serpentin tubulaire (2) est enroulé légèrement sous forme conique.

8. Système échangeur de chaleur selon l'une ou plusieurs des revendications 1 à 7, caractérisé en ce que le serpentin tubulaire (2) est réalisé en cuivre, en aluminium, en acier inoxydable, ou en acier au carbone non-allié.

9. Procédé pour réaliser la région tubulaire nervurée (2b) dans un serpentin tubulaire (2) d'un système échangeur de chaleur (1) selon l'une ou plusieurs des revendications 1 à 8,
caractérisé en ce que les nervures sont produites d'une manière connue en elle-même selon le procédé de moletage pour tube nervuré.

10. Procédé pour réaliser la région tubulaire nervurée (2b) dans un serpentin tubulaire (2) d'un système échangeur de chaleur (1) selon l'une ou plusieurs des revendications 1 à 8,
caractérisé en ce que les nervures sont rapportées par soudure ou par brasage sur un tube lisse.
